# EUROPÄISCHE PATENTSCHRIFT

(11) **EP 2 817 446 B1**
(45) Veröffentlichungstag und Bekanntmachung des Hinweises auf die Patenterteilung: **27.04.2016**
(21) Anmeldenummer: 13705414.4
(22) Anmeldetag: 07.02.2013
(51) Int. Cl.: D06F 58/26, A47L 15/42, A47L 15/48

(54) **HAUSHALTSGERÄT, INSBESONDERE WÄSCHETROCKNER, UMFASSEND EINEN LATENTWÄRMESPEICHER, SOWIE VERFAHREN ZU SEINEM BETREIBEN**
HOUSEHOLD APPLIANCE, MORE PARTICULARLY A TUMBLE DRYER, COMPRISING A LATENT HEAT STORE, AND METHOD FOR THE OPERATION THEREOF
APPAREIL MÉNAGER, EN PARTICULIER SÈCHE-LINGE, COMPRENANT UN RÉGULATEUR THERMIQUE À CHANGEMENT D'ÉTAT, ET PROCÉDÉ PERMETTANT DE FAIRE FONCTIONNER LEDIT APPAREIL MÉNAGER

(30) Priorität: 21.02.2012 DE 102012202665
(43) Veröffentlichungstag der Anmeldung: 31.12.2014
(73) Patentinhaber: BSH Hausgeräte GmbH, 81739 München (DE)
(72) Erfinder: STOLZE Andreas, 14612 Falkenseee (DE); WASCHULL, Jörg, 01099 Dresden (DE)
(86) Internationale Anmeldenummer: PCT/EP2013/052445
(87) Internationale Veröffentlichungsnummer: WO 2013/124163

(56) Entgegenhaltungen:
- WO-A1-2011/039251
- CH-A5- 690 354
- DE-A1-102009 046 547
- DE-A1-102009 049 066
- US-A- 5 709 041

## Beschreibung

Die Erfindung betrifft ein Haushaltsgerät, insbesondere Wäschetrockner, umfassend eine Arbeitskammer und mindestens einen Latentwärmespeicher, welcher je ein Speichermedium aufweist, wobei das je eine Speichermedium über je einen zugehörigen Wärmetauscher thermisch mit einem durch die Arbeitskammer zirkulierenden Arbeitsmedium gekoppelt ist, wobei Arbeitsmedium von der Arbeitskammer zunächst zu einer Wärmesenke, von dort zu dem Wärmetauscher, von dort zu einer Wärmequelle und von dort zurück in die Arbeitskammer gelangt, und wobei das je eine Speichermedium gemeinsam mit je einer Trägerflüssigkeit je ein Stoffgemisch ausbildet, welches in jeweils einem geschlossenen Kreislauf über den je zugehörigen Wärmetauscher zum Wärmeaustausch mit dem Arbeitsmedium führbar ist. Die Erfindung betrifft des Weiteren ein Verfahren zum Betreiben eines derartigen Haushaltsgeräts.

Ein Wäschetrockner verfügt üblicherweise über je eine Arbeitskammer, welche über eine frontseitige Beschickungsöffnung eines Gehäuses des Wäschetrockners mit zu trocknenden Wäschestücken befüllt werden kann. Des Weiteren ist dann eine Prozessluftführung vorgesehen, welche zur Zuführung von erwärmter Luft in die Arbeitskammer und zum anschließenden Abführen dieser Luft aus der Arbeitskammer ausgestaltet ist. Bei einem sogenannten Kondensationstrockner wird diese, durch die Arbeitskammer geleitete Luft beim Betrieb des Kondensationstrockners in einem geschlossenen Kreislauf geführt, in dem sie nach Austritt aus der Arbeitskammer in einer Wärmesenke abgekühlt wird, um mitgeführte Feuchtigkeit auszukondensieren und abzuführen, und vor Eintritt in die Arbeitskammer über eine Wärmequelle erwärmt wird. In der Arbeitskammer nimmt sie dann Feuchtigkeit der Wäschestücke auf und anschließend aus der Arbeitskammer heraus und über die Wärmesenke zur Wärmequelle zurückgeführt wird. An der Wärmesenke wird dann die aus den Wäschestücken in die Luft aufgenommene Feuchtigkeit wieder abgeschieden, so dass die über die Wärmequelle erwärmte Prozessluft bei ihrem erneuten Zuführen zur Arbeitskammer wiederum Feuchtigkeit aus den Wäschestücken aufnehmen kann. Die Wärmesenke kann ein Luft-Luft-Wärmetauscher sein, welcher von Luft aus einer Umgebung des Wäschetrockners durchströmt wird. Die Wärmequelle kann eine chemische oder elektrische Heizung sein. Auch können die Wärmesenke und die Wärmequelle zu einer Wärmepumpe gehören, in welcher Wärme, die von der Wärmesenke aus der Prozessluft aufgenommen wurde, zur Wärmequelle gefördert wird, um dort wieder an die Prozessluft abgegeben zu werden.

Eine ebenfalls bekannte Ausführung eines Wäschetrockners ist die Gestaltung als sogenannter Ablufttrockner, bei welchem die im Vorfeld erwärmte Prozessluft nach einem Hindurchführen durch eine Arbeitskammer des Trockners mitsamt der aufgenommenen Feuchtigkeit, üblicherweise über einen Abluftschlauch, aus dem Trockner herausgeführt wird. Hierbei wird also die erwärmte Prozessluft einmal durch die feuchten Wäschestücke in der Arbeitskammer hindurch geleitet und anschließend ausgestoßen, also nicht in einem geschlossenen Kreislauf bei Betrieb des Wäschetrockners geführt.

Kondensations- und Ablufttrockner können zudem jeweils als sogenannter Wärmepumpentrockner ausgeführt sein, bei welchem als Besonderheit wie oben ausgeführt eine Wärmepumpe vorgesehen ist, über welche eine Erwärmung der Prozessluft zumindest zum Teil durchgeführt wird.

Ein Wäschetrockner kann auch mit einem Latentwärmespeicher versehen sein. Darin wird ein Teil der Wärme der aus der Arbeitskammer herausgeführten Prozessluft als latente Wärme in einem Speichermedium des Latentwärmespeichers gespeichert, so dass die in der abgeführten Prozessluft enthaltene Wärme zumindest zum Teil gespeichert und später, beispielsweise zur Erwärmung von Prozessluft vor deren Eintritt in die Arbeitskammer, wieder verwendet werden kann. Mittels eines derartigen Latentwärmespeichers kann der Energieverbrauch eines Wäschetrockners reduziert werden.

Gemäß der DE 10 2009 049 066 A1 ist in einem als Trockner, insbesondere Wäschetrockner, nutzbaren Haushaltsgerät ein zweiteiliger Latentwärmespeicher vorgesehen. Zwischen den beiden Teilen des Latentwärmespeichers wird vor dem Beginn eines Trocknungsprozesses mittels eines Peltier-Elements eine Temperaturdifferenz erzeugt. Im anschließenden Trocknungsprozess dient der kalte Teil des Latentwärmespeichers als Wärmesenke zum Entfeuchten strömender Prozessluft, und der warme Teil als Wärmequelle zum Erwärmen der entfeuchteten Prozessluft, wobei diese in einem geschlossenen Kreislauf um die zu trocknenden Gegenstände strömt.

Aus der DE 10 2009 046 547 A1 geht ein Haushaltsgerät gestaltet als Kondensationstrockner hervor, welcher eine Arbeitskammer zur Aufnahme zu trocknender Wäschestücke aufweist. Ferner verfügt dieser Kondensationstrockner über eine Prozessluftführung, über welche ein Arbeitsmedium in Form von Prozessluft mittels eines Gebläses über eine Heizung geleitet und in den Innenraum der Trocknungskammer geführt wird, wo die erwärmte Luft Feuchtigkeit der darin befindlichen Wäsche aufnimmt. Im Anschluss daran wird die Prozessluft dann durch ein Flusensieb hindurch zu einem Wärmetauscher geführt, an welchem die Prozessluft abgekühlt wird und dementsprechend in der Luft aufgenommene Feuchtigkeit auskondensiert. Im Folgenden wird die Prozessluft dann über das Gebläse wieder angesaugt und zur Heizung geleitet, um nach einer erneuten Erwärmung wiederum in den Innenraum der Arbeitskammer geführt zu werden. Der Wärmetauscher ist dabei als Luft-Luft-Wärmetauscher ausgeführt, an welchem ein Wärmeaustausch der Prozessluft mit ebenfalls an dem Wärmetauscher vorbei geführter Kühlluft stattfindet. Die hierbei erwärmte Kühlluft wird anschließend durch einen Latentwärmespeicher geleitet, wo sie durch Übertragung von Wärmeenergie auf ein Speichermedium des Latentwärmespeichers abgekühlt und anschließend aus dem Wäschetrockner heraus geleitet wird. Bei dem Speichermedium des Latentwärmespeichers handelt es sich hierbei um ein PCM (Phase Change Material), das die Wärmeenergie durch einen Phasenübergang von fest nach flüssig speichern kann. Die in diesem Wärmeeinkopplungsprozess in dem Latentwärmespeicher als latente Wärme aufgenommene thermische Energie kann im Rahmen eines Wärmerückgewinnungsprozesses bei vollständiger Befüllung des Latentwärmespeichers zur Erwärmung der Prozessluft herangezogen werden, indem die Heizung abgeschaltet und die Prozessluft im Folgenden durch Übertragung von Wärme vom Latentwärmespeicher auf die Arbeitskammer aufgeheizt wird, oder die Prozessluft durch den Latentwärmespeicher vorgewärmt wird, bevor sie zur Heizung gelangt und dort bis zu der gewünschten Temperatur erwärmt wird. Hierbei durchläuft das PCM einen Phasenübergang von flüssig nach fest, wobei nach einer vollständigen Entladung des Latentwärmespeichers wiederum ein Wärmeeinkopplungsprozess bis zur nächsten Entlademöglichkeit gestartet wird.

Ausgehend von dem vorstehend beschriebenen Stand der Technik ist es nun die Aufgabe der vorliegenden Erfindung, ein weiterentwickeltes Haushaltsgerät zur Verfügung zu stellen, bei welchem mindestens ein Latentwärmespeicher mit einer hohen Effizienz und einer konstanten Dynamik vorgesehen ist. Auch soll ein Verfahren zum betrieben eines solchen Haushaltsgeräts angegeben werden.

Diese Aufgabe wird bezüglich einer Vorrichtung ausgehend vom Oberbegriff des entsprechenden unabhängigen Patentanspruchs in Verbindung mit dessen kennzeichnenden Merkmalen gelöst. Bezüglich eines Verfahrens erfolgt eine Lösung der Aufgabe entsprechend der Merkmale des entsprechenden nebengeordneten unabhängigen Patentanspruchs. Die jeweils folgenden abhängigen Patentansprüche geben jeweils vorteilhafte Weiterbildungen der Erfindung wieder, wobei vorteilhafte Weiterbildungen der Erfindung in Bezug auf eine Vorrichtung vorteilhaften Weiterbildungen in Bezug auf ein Verfahren entsprechen und umgekehrt, und dies auch dann, wenn darauf hierin nicht explizit hingewiesen ist.

Gemäß der Erfindung umfasst ein Haushaltsgerät, insbesondere Wäschetrockner, eine Arbeitskammer und mindestens einen Latentwärmespeicher, welcher je ein Speichermedium aufweist, wobei das je eine Speichermedium über je einen zugehörigen Wärmetauscher thermisch mit einem durch die Arbeitskammer zirkulierenden Arbeitsmedium gekoppelt ist, wobei Arbeitsmedium von der Arbeitskammer zunächst zu einer Wärmesenke, von dort zu dem Wärmetauscher, von dort zu einer Wärmequelle und von dort zurück in die Arbeitskammer gelangt, und wobei das je eine Speichermedium gemeinsam mit je einer Trägerflüssigkeit je ein Stoffgemisch ausbildet, welches in jeweils einem geschlossenen Kreislauf über den je zugehörigen Wärmetauscher zum Wärmeaustausch mit dem Arbeitsmedium führbar ist. Des Weiteren zirkuliert das je eine Stoffgemisch zwischen dem je zugehörigen Wärmetauscher und mindestens einem Sammelbehälter in dem jeweiligen, geschlossenen Kreislauf, und der Sammelbehälter ist mit dem über den je zugehörigen Wärmetauscher geführten Stoffgemisch schichtweise wieder befüllbar.

Im Sinne der Erfindung handelt es sich bei dem Speichermedium dabei um ein PCM (Phase Change Material), welches unter Ausnutzung der Enthalpie reversibler thermodynamischer Zustandsänderungen thermische Energie speichert oder abgibt. Die Speicherfähigkeit basiert hierbei also auf einer Enthalpiedifferenz bei einer Phasenumwandlung des PCM von einer Niedertemperaturphase (z. B. fest) in eine Hochtemperaturphase (z. B. flüssig), wobei diese Phasenumwandlung bei einer festen Temperatur bzw. in einem schmalen Temperaturfenster stattfindet. Insbesondere findet dabei ein PCM Anwendung, bei welchem Phasenübergänge zwischen einem festen und einem flüssigen Zustand vollzogen werden, bevorzugt auf der Basis von Salzen, Salzhydraten oder Paraffinen. Abgesehen davon ist aber prinzipiell auch die Verwendung von Speichermedien denkbar, bei welchen Phasenübergänge flüssig-gasförmig, fest-gasförmig, amorph-kristallin etc. stattfinden. Im Rahmen eines Wärmeeinkopplungsprozesses wird dann thermische Energie gespeichert, indem diese zur Durchführung eines Phasenwechsels des PCM, beim Phasenübergang fest-flüssig also zum Aufschmelzen, herangezogen wird. Im Folgenden kann diese gespeicherte thermische Energie dann im Rahmen eines Wärmerückgewinnungsprozesses wieder freigegeben werden, indem der Phasenübergang des PCM in die entgegengesetzte Richtung vollzogen wird. Bei Verwendung eines PCMs mit Phasenübergängen fest-flüssig wird dieses PCM beim Wärmerückgewinnungsprozess von einem flüssigen Zustand in eine feste Phase überführt, und entsprechend einer Erstarrungsenthalpie des PCM dabei thermische Energie in Form von Wärme freigesetzt.

Die Erfindung umfasst auch die technische Lehre, dass das Speichermedium mit einer Trägerflüssigkeit ein Stoffgemisch ausbildet, welches in einem geschlossenen Kreislauf über den zugehörigen Wärmetauscher zum Wärmeaustausch mit dem Arbeitsmedium führbar ist. Das Speichermedium wird also in Wärmeaustausch mit dem Arbeitsmedium des Haushaltsgeräts gebracht, indem ein durch das Speichermedium und eine Trägerflüssigkeit ausgebildetes Stoffgemisch in einem geschlossenen Kreislauf über den zugehörigen Wärmetauscher geführt wird. Mittels einer derartigen Ausgestaltung kann ein Wärmeaustausch zwischen dem Speichermedium und dem Arbeitsmedium des Haushaltsgeräts direkt im Bereich des zugehörigen Wärmetauschers stattfinden, so dass durch diesen direkten Wärmeaustausch eine Effizienz des Latentwärmespeichers verbessert ist. Dadurch, dass der Latentwärmespeicher im Prinzip durch das im geschlossenen Kreislauf geführte Stoffgemisch aus Trägerflüssigkeit und Speichermedium gebildet ist, kann ein Phasenwechsel des Speichermediums unmittelbar am Wärmetauscher vollzogen werden, so dass ein größerer Teil der thermischen Energie des vorbei geführten Arbeitsmediums auch auf das Speichermedium übertragen wird. Zudem kann durch Einstellen einer über den zugehörigen Wärmetauscher stattfindenden Fließgeschwindigkeit des Stoffgemischs die Beladung des Latentwärmespeichers direkt beeinflusst werden. Ferner führt der ständige Austausch des immer gleich temperierten, über den Wärmetauscher geführten Stoffgemischs zu gleichmäßigen Temperaturdifferenzen im zugehörigen Wärmetauscher.

Schließlich kann der durch das Stoffgemisch ausgebildete Latentwärmespeicher in seiner Platzierung optimal an die jeweils vorherrschenden Bauraumverhältnisse des Haushaltsgeräts angepasst werden, da nur der zugehörigen Wärmetauscher in Kontakt mit dem aus der Arbeitskammer abgeführten Arbeitsmedium zu bringen ist, während der restliche Teil des geschlossenen Kreislaufs ausgehend hiervon frei platziert werden kann.

Im Sinne der Erfindung bedeutet "schichtweises Befüllen", dass dem Speicherbehälter neu zugeführtes Stoffgemisch sich nicht in wesentlichem Umfang mit bereits vorhandenem Speichermedium vermischt, sondern von diesem getrennt bleibt. Beim betreiben des Haushaltsgeräts im Sinne der Erfindung macht das Speichermedium einen Phasenübergang durch, wenn es dem Speicherbehälter entzogen und durch den Wärmetauscher geführt wird. Das schichtweise Befüllen stellt daher sicher, dass Bereiche des Stoffgemisches im Speicherbehälter, in welchen das Speichermedium in verschiedenen Phasen vorliegt, voneinander getrennt bleiben. Auf diese Weise kann das Speichermedium im wesentlichen vollständig während einer ersten Hälfte eines in dem Haushaltsgerät ablaufenden Trocknungsprozesses von einer festen in eine flüssige Phase und während einer anschließenden zweiten Hälfte von der flüssigen in die feste Phase überführt werden. Dabei wird die Speicherfähigkeit des Speichermediums bestmöglich ausgenutzt.

Im Rahmen der Erfindung handelt es sich bei dem Haushaltsgerät insbesondere um einen Wäschetrockner, bei welchem in einer Arbeitskammer aufgenommene, zu trocknende Wäschestücke durch ein Arbeitsmedium in Form von Prozessluft getrocknet werden. Dieser Wäschetrockner kann dabei als Ablufttrockner ausgestaltet sein, bei welchem die aus der Arbeitskammer abgeführte Prozessluft über den Wärmetauscher des Latentwärmespeichers und anschließend aus dem Wäschetrockner herausgeführt wird. Ebenso gut kann es sich hierbei aber auch um einen Kondensationstrockner handeln, bei welchem die aus der Arbeitskammer herausgeführte Prozessluft über den zugehörigen Wärmetauscher des mindestens einen Latentwärmespeichers geführt und anschließend über eine Heizeinrichtung erwärmt wieder in die Arbeitskammer zurückgeleitet wird. Beide vorgenannten Varianten können dabei als Wärmepumpentrockner ausgeführt sein, bei welchem ein Beheizen der in die Arbeitskammer geführten Prozessluft zumindest zum Teil über eine Wärmepumpe bewerkstelligt wird.

Abgesehen davon kann es sich bei dem erfindungsgemäßen Haushaltsgerät aber auch um eine Waschmaschine oder eine Spülmaschine handeln. Im Falle einer Ausgestaltung als Waschmaschine kommt dann als Arbeitsmedium Wasser zur Anwendung, das in einer Arbeitskammer in Gestalt eines Laugenbehälters zum Waschen von Wäschestücken Anwendung findet, wobei das Wasser dann beim Abpumpen aus dem Laugenbehälter an dem zugehörigen Wärmetauscher des mindestens einen Latentwärmespeichers vorbeigeführt wird. Bei einer Ausgestaltung als Spülmaschine wird ebenfalls ein Arbeitsmedium in Form von Wasser beim Abpumpen aus einem Innenraum an dem zugehörigen Wärmetauscher vorbeigeführt. Ferner kann es sich bei dem Haushaltsgerät auch um eine Kombination aus einer Waschmaschine und einem Wäschetrockner in Form eines Waschtrockners handeln.

Bei Ausgestaltung des erfindungsgemäßen Haushaltsgeräts als Kondensationstrockner besteht zudem der weitere Vorteil, dass am zugehörigen Wärmetauscher des mindestens einen Latentwärmespeichers neben dem Wärmeeinkopplungsprozess, also der Übertragung thermischer Energie auf das Speichermediums, auch eine direkte Übertragung thermischer Energie auf die vorbeiströmende Prozessluft in einem Wärmerückgewinnungsprozess stattfinden kann. So wird im ersten Fall Wärme der vorbei geführten Prozessluft auf das Stoffgemisch übertragen, während im entgegengesetzten Fall eine Wärmeübertragung ausgehend vom Stoffgemisch auf die vorbeiströmende Prozessluft stattfindet. Im Rahmen des Wärmeeinkopplungsprozesses kondensiert dabei Wasser aus der vorbei geführten Prozessluft aus, so dass der Wärmetauscher des mindestens einen Latentwärmespeichers zudem als Kondensator fungiert.

Besonders bevorzugt wird hierbei ein Stoffgemisch mit einem Speichermedium verwendet, dessen Arbeitstemperatur im Bereich von 60° bis 80° Celsius liegt, insbesondere mit schmalen Temperaturbereichen bei der Wärmeabgabe in der Erstarrungsphase des Speichermediums und einer kleinen Hysterese zur Schmelztemperatur. Dieser Temperaturbereich liegt im Bereich der Arbeitstemperatur der am Wärmetauscher vorbei geführten Luft, so dass der Wärmeaustausch im Wärmeeinkopplungsprozess zu einem Phasenwechsel des zunächst in der Niedertemperaturphase befindlichen Speichermediums und einem Auskondensieren von Wasser führt, während im Rahmen des Wärmerückgewinnungsprozesses und dem in die entgegengesetzte Richtung ausgeführten Phasenwechsel des Speichermediums eine ausreichende Erwärmung der vorbei geführten Luft erzielt wird.

Entsprechend der Wahl der Arbeitstemperatur müssen die Wärmesenke und die Wärmequelle betrieben werden. Anfangs mag es erwünscht sein, dem Wärmetauscher Prozessluft bei einer möglichst hohen Temperatur zuzuführen, und dabei kann es von Vorteil sein, den Entzug von Wärme aus der Prozessluft in der Wärmesenke zu reduzieren oder ganz zu unterbinden. Ist der Latentwärmespeicher voll beladen, so kann die Wärmesenke bei möglichst hoher Leistung arbeiten und der Prozessluft Wärme entziehen, so dass diese sich beim Durchströmen des Wärmetauschers wieder erwärmen kann. Dabei kann dann die Abgabe von Wärme durch die Wärmequelle reduziert oder unterbunden werden, so dass der Wärmetauscher mehr oder weniger allein das Erwärmen der Prozessluft übernimmt. Dieser Reduzierung der Funktion der Wärmequelle ist je ausgeprägter möglich, je höher die Betriebstemperatur des Latentwärmespeichers ist; auch daraus erklärt sich die Bevorzugung der im vorliegenden Zusammenhang eher hohen Arbeitstemperatur des Latentwärmespeichers zwischen 60 °C und 80°C.

Übrigens ist es in diesem Zusammenhang auch denkbar, mehrere voneinander separate Wärmetauscher mit zugeordneten, voneinander separaten Latentwärmespeichern vorzusehen, welche Wärmetauscher nacheinander von der Prozessluft durchströmt werden und zu verschiedenen Zeitpunkten ihren Funktionswechsel zwischen Kühlen und Heizen der Prozessluft vollziehen.

Im Unterschied hierzu erfolgt bei dem Haushaltsgerät gemäß der DE 10 2009 046 547 A1 eine thermische Koppelung von der an dem zugehörigen Wärmetauscher vorbeiströmenden Luft mit dem Speichermedium des Latentwärmespeichers mittels Kühlluft, welche über den Wärmetauscher im Wärmeaustausch mit der Prozessluft steht und anschließend durch den Latentwärmespeicher zur Abgabe der aufgenommenen Wärme an das Speichermedium geführt wird. Eine Wärmeübertragung von der Prozessluft auf das Speichermedium des Latentwärmespeichers erfolgt also indirekt, wodurch der Wirkungsgrad entsprechend verschlechtert ist. Ferner muss der Latentwärmespeicher direkt an der Arbeitskammer des Kondensationstrockners angeordnet sein, um bei einem vollständig geladenen Latentwärmespeicher die Wärme in diesem Bereich an die Arbeitskammer und damit wiederum mittelbar an die hierdurch strömende Luft abzugeben. In der Folge ist auch der Wärmerückgewinnungsprozess mit Verlusten verbunden, da die in die Arbeitskammer einströmende Luft nicht direkt beheizt wird, sondern sich durch die beheizte Arbeitskammer erst erwärmt. Somit kann die einströmende, kalte Luft zu Beginn nur eine geringe Menge an Feuchtigkeit aufnehmen, was den Trocknungseffekt verlangsamt. Schließlich muss für die Anordnung des Latentwärmespeichers im Bereich der Arbeitskammer ein entsprechender Platz vorgesehen werden, was sich aufgrund der engen Bauraumverhältnisse in diesem Bereich schwierig gestaltet.

Im Sinne der Erfindung sind im Bereich des je zugehörigen Wärmetauschers des mindestens einen Latentwärmespeichers insbesondere hohe Umpumpgeschwindigkeiten und große Turbulenzen durch entsprechende konstruktive Maßnahmen vorzusehen, um Wärmeübergänge zwischen dem Stoffgemisch und dem vorbei geführten Arbeitsmedium zu verbessern. Des Weiteren ist dem je zugehörigen Wärmetauscher des mindestens einen Latentwärmespeichers bevorzugt ein weiterer Wärmetauscher vorgeschaltet, der einem weiteren Latentwärmespeicher zugeordnet ist. Dabei verfügt dieser weitere Latentwärmespeicher dann ebenfalls über ein Speichermedium in Form eines PCMs, wobei die thermische Kopplung dieses weiteren Latentwärmespeichers mit dem Arbeitsmedium dabei über Kühlluft bewerkstelligt ist, die über den Wärmetauscher des weiteren Latentwärmespeichers geführt ist und den Latentwärmespeicher durchströmt. Allerdings kann auch der weitere Latentwärmespeicher mit einem aus einem Speichermedium und einer Trägerflüssigkeit gebildeten Stoffgemisch ausgestattet sein.

Im Rahmen der Erfindung liegt es nicht nur, einen Latentwärmespeicher vorzusehen, welcher fest eingebaut und im Rahmen einer gewöhnlichen Nutzung des Haushaltsgeräts nicht entnommen werden soll oder kann. Im Rahmen der Erfindung liegt es auch, einen Latentwärmespeicher vorzusehen, der im Haushaltsgerät nicht fest eingebaut ist und durch einen gewöhnlichen Benutzer des Haushaltsgeräts entnommen werden kann, um in einem anderen Haushaltsgerät bzw. einer anderen Anwendung mit Wärme beladen oder von Wärme entladen zu werden. Ebenso könnte das erfindungsgemäße Haushaltsgerät Anschlüsse aufweisen, durch die ein anderes Haushaltsgerät oder eine andere Anwendung zu entsprechenden Zwecken Zugriff auf den Latentwärmespeicher bzw. seinen Inhalt nehmen könnte.

Entsprechend einer vorteilhaften Ausführungsform der Erfindung ist das Stoffgemisch ausgebildet, indem ein mikroverkapseltes oder ein polymerisiertes PCM in die Trägerflüssigkeit suspendiert oder indem ein, mit Additiven versetztes PCM in die Trägerflüssigkeit emulgiert ist. In den ersten beiden Fällen wird also eine Suspension aus Trägerflüssigkeit und einem darin eingebrachten PCM gebildet, während im letztgenannten Fall ein Stoffgemisch in Form einer Emulsion realisiert wird. In allen Fällen wird dabei ein jeweils gearteter Phasenwechsel des PCM in der Trägerflüssigkeit ermöglicht, ohne dass sich das jeweils aufgenommene PCM von der Trägerflüssigkeit absetzt.

Besonders bevorzugt ist es, das Stoffgemisch als Gel, also als viskose, pastöse Zubereitung auszubilden. In dieser Form kann das Stoffgemisch mit einer entsprechenden Pumpe gefördert werden, es ist aber sichergestellt, dass sich die Trägerflüssigkeit und das Speichermedium nicht durch Absetzen des Speichermediums voneinander trennen können. Auch wird erreicht, dass es beim wiedereinführen von Stoffgemisch in den Speicherbehälter nicht zum Vermischen des eingeführten mit bereits vorhandenem Speichermedium kommt.

In Weiterbildung der Erfindung zirkuliert das Stoffgemisch zwischen dem zugehörigen Wärmetauscher und mindestens einem Sammelbehälter in dem geschlossenen Kreislauf. Insbesondere ist dieser mindestens eine Sammelbehälter dabei thermisch isoliert, so dass das bereits über den Wärmetauscher geführte und in den Sammelbehälter zurückgeströmte Stoffgemisch nicht schon im Bereich des Sammelbehälters aufgenommene, thermische Energie abgibt.

Erfindungsgemäß wird der Sammelbehälter mit dem über den zugehörigen Wärmetauscher geführten Stoffgemisch schichtweise wieder befüllt. In Folge dieses schichtweisen Befüllens wird der Latentwärmespeicher immer vollständig geladen und auch wieder entladen, da ein Durchmengen des bereits über den Wärmetauschers geführten Stoffgemischs mit dem noch nicht zum Wärmeaustausch in diesen Bereich geleiteten Gemischs durch die schichtweise Wiederbefüllung verhindert wird.

Gemäß einer diesbezüglich ersten bevorzugten Alternative weist der Sammelbehälter bezüglich einer Schwerkraft ein oberes Ende und ein unteres Ende auf und ist eingerichtet zum Abführen des Stoffgemisches am unteren Ende und zum Zuführen des Stoffgemisches am oberen Ende.

Gemäß einer diesbezüglich zweiten bevorzugten Alternative verfügt der Sammelbehälter dabei über eine verschiebbare Innenwand, die das bereits über den Wärmetauscher geführte Stoffgemisch von dem, noch zu dieser Stelle zu leitenden Gemisch trennt.

Gemäß einer diesbezüglich dritten bevorzugten Alternative sind ein erster und ein zweiter Sammelbehälter vorgesehen, wobei der erste Sammelbehälter dem zugehörigen Wärmetauscher in Förderrichtung des Stoffgemischs vorgeschaltet und der zweite Sammelbehälter dem zugehörigen Wärmetauscher in Förderrichtung nachgeschaltet ist. Zudem kann der zweite Sammelbehälter in den ersten Sammelbehälter entleert werden. Auch hierbei kann das bereits über den zugehörigen Wärmetauscher geführte Stoffgemisch von dem Stoffgemisch getrennt werden, welches noch zum Wärmeaustausch mit dem Arbeitsmedium über den zugehörigen Wärmetauscher zu fördern ist. Denn das aus dem ersten Sammelbehälter entnommene Stoffgemisch wird nach einem Führen über den zugehörigen Wärmetauscher in den zweiten Sammelbehälter gefördert und ist somit von dem, noch im ersten Sammelbehälter befindlichen Anteil getrennt. Erst durch Entleeren des zweiten Sammelbehälters in den ersten Sammelbehälter kann das Stoffgemisch hierhin zurückgelangen und steht dann für eine erneute Zuführung zu dem zugehörigen Wärmetauscher zur Verfügung. Dieses Entleeren kann beispielsweise dann vorgenommen werden, wenn der erste Sammelbehälter vollständig oder nahezu vollständig leergelaufen ist und dementsprechend nahezu das gesamte Stoffgemisch bereits über den zugehörigen Wärmetauscher geführt wurde.

In Weiterbildung der Erfindung sind der zugehörige Wärmetauscher und der mindestens eine Sammelbehälter in dem jeweiligen, geschlossenen Kreislauf über ein Leitungssystem miteinander verbunden, im welchem eine Umwälzpumpe vorgesehen ist, die das Stoffgemisch im Betrieb aus dem mindestens einen Sammelbehälter ansaugt und über den je zugehörigen Wärmetauscher führt, sowie in den mindestens einen Sammelbehälter zurückbefördert. Dabei kann über diese Umwälzpumpe eine Umwälzgeschwindigkeit eingestellt werden, bei welcher ein optimaler Wärmeübergang vom Arbeitsmedium auf das Stoffgemisch bzw. umgekehrt stattfindet. Im Sinne der Erfindung ist die Umwälzpumpe dabei bevorzugt als Flügelzellenpumpe, Zahnradpumpe, oder ähnliches ausgestaltet.

Entsprechend einer weiteren bevorzugten Ausgestaltung der Erfindung ist der zugehörige Wärmetauscher ein Plattenwärmetauscher, dessen Platten über hydrophobe Oberflächen verfügen. Bei Anwendung des erfindungsgemäßen Aufbaus im Bereich eines Kondensationstrockner kann dementsprechend in der Prozessluft enthaltene Feuchtigkeit an den Platten des Plattenwärmetauschers auskondensieren, wobei aufgrund der hydrophoben Oberflächeneigenschaften der Platten ein verbesserter Abfluss von ausgefallenem Kondensat stattfindet. Dies verringert zu Beginn des Wärmerückgewinnungsprozesses eine Rückbefeuchtung der Prozessluft durch an den Platten anhaftendes Wasser.

Entsprechend einer anderen bevorzugten Ausgestaltung der Erfindung ist die Wärmesenke ein Luft-Luft-Wärmetauscher.

Entsprechend noch einer anderen bevorzugten Ausgestaltung der Erfindung ist die Wärmequelle eine elektrische Heizung.

Erfindungsgemäß wird das Speichermedium des Stoffgemischs bei Betreiben des erfindungsgemäßen Haushaltsgeräts in einem Wärmeeinkopplungsprozess durch Wärme des Arbeitsmediums von einer festen Phase in eine flüssige Phase überführt, wobei nach einem Überführen des gesamten oder nahezu gesamten Speichermediums in die flüssige Phase in einen Wärmerückgewinnungsprozess übergegangen wird. Hierzu wird ein Beheizen des Arbeitsmediums über eine Wärmequelle des Haushaltsgeräts reduziert oder unterbrochen und das Arbeitsmedium im Folgenden am zugehörigen Wärmetauscher von dem Speichermedium erwärmt, welches dabei in die feste Phase zurückkehrt. Nach einem Zurückkehren des gesamten oder nahezu gesamten Speichermediums in die feste Phase wird dann wiederum in den vorigen Wärmeeinkopplungsprozess übergewechselt und der Ablauf startet von neuem. Mit anderen Worten wird also in einem ersten Prozess Wärme ausgehend von dem Arbeitsmedium in das Stoffgemisch eingebracht, wobei das, im Stoffgemisch befindliche Speichermedium insbesondere und bevorzugtermaßen einen Phasenübergang von einer festen Phase in eine flüssige Phase durchführt. Ist dann das gesamte Speichermedium in die flüssige Phase überführt worden, so wird ein Beheizen des Arbeitsmediums über eine, separat vorgesehene Wärmequelle des Haushaltsgeräts reduziert oder unterbrochen, so dass das Arbeitsmedium vor einem erneuten Zuführen zur Arbeitskammer im Folgenden über das Speichermedium am zugehörigen Wärmetauscher erwärmt wird. In diesem sogenannten Wärmerückgewinnungsprozess kehrt das Speichermedium aufgrund der Abgabe thermischer Energie wieder in die erste, feste Phase zurück, wobei nach einem Zurückkehren des gesamten oder nahezu gesamten Speichermediums in die feste Phase, also einem vollständigen Entladen des mindestens einen Latentwärmespeichers, wieder in den Wärmeeinkopplungsprozess übergegangen und damit ein erneutes Laden des Latentwärmespeichers gestartet wird.

Im Sinne der Erfindung wird ein Ladezustand des Latentwärmespeichers insbesondere durch Messen der Temperatur im Bereich eines Sammelbehälters des Latentwärmespeichers durchgeführt, da bei einem vollständigen Überführen des gesamtes Speichermediums des Stoffgemischs in die flüssige Phase im Folgenden thermische Energie in Form von sensibler Wärme durch die Trägerflüssigkeit aufgenommen wird, was in einer merklichen Temperaturänderung des Stoffgemischs resultieren kann. Bevorzugt ist zu diesem Zweck im Bereich des Sammelbehälters ein Temperatursensor vorgesehen, welcher eine Temperatur des, bereits über den zugehörigen Wärmetauscher geführten Stoffgemischs erfasst.

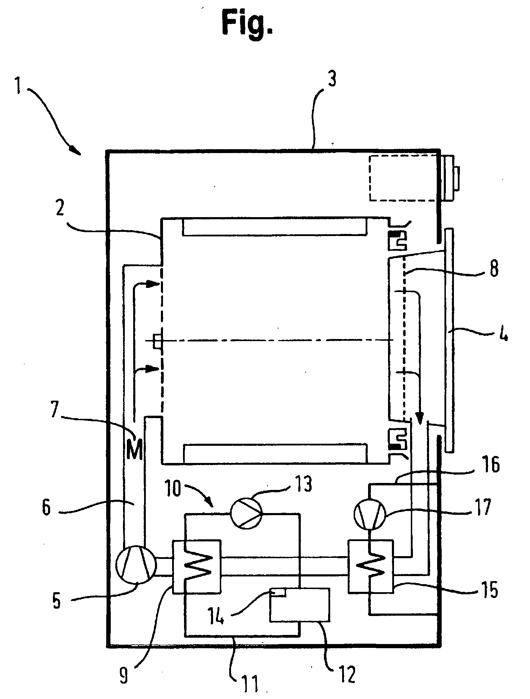

Die Erfindung ist nicht auf die angegebene Kombination der Merkmale der nebengeordneten Ansprüche oder der abhängigen Ansprüche beschränkt. Es ergeben sich darüber hinaus Möglichkeiten, einzelne Merkmale, welche sich aus den Patentansprüchen, der nachfolgenden Beschreibung einer Ausführungsform oder unmittelbar aus der Zeichnung ergeben, miteinander zu kombinieren. Außerdem soll die Bezugnahme der Patentansprüche auf die Zeichnung durch Verwendung von Bezugszeichen den Schutzumfang der Patentansprüche nicht beschränken.

Weitere, vorteilhafte Ausgestaltungen der Erfindung ergeben sich aus der nachfolgenden Beschreibung einer bevorzugten Ausführungsform der Erfindung, die Bezug auf die in der Zeichnung dargestellte Figur nimmt.

Die einzige Figur zeigt eine schematische Ansicht eines Haushaltsgeräts gemäß einer bevorzugten Ausführungsform, wobei es sich bei diesem Haushaltsgerät um einen Kondensationstrockner 1 handelt. Dieser Kondensationstrockner 1 weist dabei eine Arbeitskammer 2 in Form einer Trommel auf, welche in einem Gehäuse 3 des Kondensationstrockners 1 drehbar um eine horizontale Achse gelagert ist und der Aufnahme von zu trocknenden Wäschestücken dient. Ein Beladen der Arbeitskammer 2 ist dabei von einer Frontseite des Gehäuses 3 her über eine Beschickungsöffnung möglich, die über eine Tür 4 verschlossen werden kann.

Zum Trocknen von in der Arbeitskammer 2 befindlicher Wäsche wird bei Betrieb des Kondensationstrockners 1 mittels eines Gebläses 5 Prozessluft über einen Prozessluftkanal 6 durch die Arbeitskammer 2 hindurchgeführt. Kurz vor Eintreten in die Arbeitskammer 2 wird diese Prozessluft dabei über eine Wärmequelle 7 in Form einer elektrischen Heizung geführt und damit erwärmt, so dass sie im Bereich der Arbeitskammer 2 Feuchtigkeit der darin befindlichen Wäsche aufnimmt und diese trocknet. Nach Durchströmen der Arbeitskammer 2 tritt die Prozessluft über ein Flusensieb 8 wieder in den Prozessluftkanal 6 im Bereich der Tür 4 ein und wird über das Gebläse 5 angesaugt.

Wie zudem aus der einzigen Figur ersichtlich ist, ist dem Gebläse 5 dabei ein Wärmetauscher 9 eines Latentwärmespeichers 10 vorgeschaltet, wobei dieser Wärmetauscher 9 dabei bevorzugt als Plattenwärmetauscher ausgeführt ist, dessen Platten über hydrophobe Oberflächen verfügen. Als Besonderheit wird der Latentwärmespeicher 10 dabei dadurch gebildet, dass der Wärmetauscher 9 über ein Leitungssystem 11 in einem geschlossenen Kreislauf mit einem Sammelbehälter 12 in Verbindung steht, wobei in dem geschlossenen Kreislauf zwischen Wärmetauscher 9 und Sammelbehälter 12 ein Stoffgemisch des Latentwärmespeichers 10 strömt, welches aus einer Trägerflüssigkeit mit darin suspendiertem, mikroverkapseltem PCM (Phase Change Material) gebildet ist. Dabei handelt es sich bei der Trägerflüssigkeit bevorzugt um Wasser, während das PCM in Form von Paraffinen vorliegt, die einen Phasenwechsel zwischen fest und flüssig beim Wärmeaustausch mit der Prozessluft innerhalb der Trägerflüssigkeit ausführen kann. Das durch die Trägerflüssigkeit und das PCM gebildete Stoffgemisch arbeitet dabei in einem Temperaturbereich von 60° bis 80° Celsius mit schmalen Temperaturbereichen bei der Wärmeabgabe in dem Phasenwechsel von flüssig nach fest und einer kleinen Hysterese zur Schmelztemperatur. Das gebildete Stoffgemisch wird dabei innerhalb des Leitungssystems 11 zwischen dem Wärmetauscher 9 und dem Sammelbehälter 12 mittels einer Umwälzpumpe 13 zirkuliert.

Eine Entnahme und ein Befüllen des Sammelbehälters 12 wird dabei schichtweise gestaltet, indem dieser mit einer - vorliegend nicht weiter dargestellten - verschiebbaren Innenwand versehen ist, so dass sich das, an einer Oberseite des Sammelbehälters 12 eingefüllte Stoffgemisch nicht mit dem an einer Unterseite des Sammelbehälters 12 über die Umwälzpumpe 13 anzusaugenden Stoffgemisch vermengt. Infolge dessen wird bereits über den Wärmetauscher 9 geführtes Stoffgemisch erst dann wieder durch die Umwälzpumpe 13 angesaugt, sobald bereits die komplette Menge an Stoffgemisch über den Wärmetauscher 9 geführt wurde.

Zu Beginn eines Wärmeeinkopplungsprozesses liegt das Stoffgemisch in dem Sammelbehälter 12 vollständig mit PCM in einer festen Phase vor. Das Stoffgemisch wird nun über die Trägerflüssigkeit mittels der Umwälzpumpe 13 angesaugt und zum Wärmetauscher 9 geführt, wo es in Wärmeaustausch mit der, in diesem Bereich vorbei geführten Prozessluft gelangt. Am Wärmetauscher 9 wird Wärme der vorbei geführten Prozessluft auf das Stoffgemisch übertragen, wobei dabei in der Prozessluft gebundene Feuchtigkeit am Wärmetauscher 9 auskondensiert, wohingegen das in der Trägerflüssigkeit vorhandene PCM diese Wärme als Schmelzenthalpie aufnimmt und einen Phasenwechsel von der festen Phase in eine flüssige Phase vollzieht. Im Folgenden wird das aufgeschmolzene PCM dann wiederum an der Oberseite des Sammelbehälters 12 in diesen zurückgeführt.

Der Wärmeeinkopplungsprozess läuft solange, bis das gesamte PCM des Stoffgemischs aufgeschmolzen worden ist und in der Folge keine latente Wärme mehr aufnehmen kann. Dieser vollständige Beladungszustand des Latentwärmespeichers 10 wird mit Hilfe eines Temperatursensors 14 detektiert, der im Sammelbehälter 12 vorgesehen ist und ein Anstieg des, über das Leitungssystem 11 zirkulierenden Stoffgemischs feststellt. Denn bei Aufnehmen der thermischen Energie im Bereich des Wärmetauschers 9 als latente Wärme ändert sich die Temperatur des Stoffgemischs nicht oder nur sehr geringfügig, da die thermische Energie als Schmelzenthalpie zum Aufschmelzen des PCMs herangezogen wird. Ist nun allerdings das komplette PCM aufgeschmolzen, so wird die thermische Energie nunmehr auch als sensible Wärme durch die Trägerflüssigkeit aufgenommen, so dass sich eine Temperatur des Stoffgemischs nunmehr erfassbar ändert.

Ab diesem Zeitpunkt wird dann von dem Wärmeeinkopplungsprozess in einen Wärmerückgewinnungsprozess übergegangen, indem die Wärmequelle 7 abgeschaltet wird und die, der Arbeitskammer 2 zugeführte Prozessluft nun nicht mehr vor deren Eintritt erwärmt wird. Infolgedessen weist auch die im Bereich der Tür 4 in die Prozessluftführung 6 einströmende Luft und damit auch die am Wärmetauscher 9 ankommende Luft eine geringere Temperatur auf, wobei diese Temperatur ab einem bestimmten Zeitpunkt unterhalb der Schmelztemperatur des PCMs liegt. Ab diesem Zeitpunkt wird die am Wärmetauscher 9 vorbeiströmende Prozessluft nun über das PCM erwärmt, welches dabei einen Phasenwechsel von der flüssigen Phase in die feste Phase durchführt und dabei in die feste Phase zurückkehrt. Aufgrund der hydrophoben Oberflächen des Wärmetauschers 9 wird dabei zu Beginn des Wärmerückgewinnungsprozesses verhindert, dass eine Rückbefeuchtung der am Wärmetauscher 9 vorbei geführten Prozessluft durch Anhaften des Wassers stattfindet. Die jeweils zugeführte thermische Energie entspricht dabei der Erstarrungsenthalpie des PCMs. Im weiteren Verlauf der Wärmerückgewinnungsphase wird dann das gesamte, im Vorfeld aufgeschmolzene PCM des Stoffgemischs des Latentwärmespeichers 10 dazu aufgewendet, am Wärmetauscher 9 vorbeigeführte Prozessluft zu erwärmen, wobei der Latentwärmespeicher 10 dabei dadurch schrittweise entladen wird, dass in die feste Phase zurückgeführtes PCM stetig über die Trägerflüssigkeit in den Vorratsbehälter 12 zurückbefördert wird. Ab einem bestimmten Zeitpunkt liegt dann wiederum das gesamte PCM des Stoffgemischs in fester Phase vor, so dass der Latentwärmespeicher 10 vollständig entladen ist. Ab diesem Zeitpunkt wird dann wiederum die Wärmequelle 7 des Kondensationstrockners 1 aktiviert und in der Folge die Prozessluft wieder elektrisch beheizt, so dass der Prozess wieder mit einem Wärmeeinkopplungsprozess von neuem beginnt.

Mittels der erfindungsgemäßen Ausgestaltung eines Haushaltgeräts und dem erfindungsgemäßen Verfahren ist es somit möglich, einen Latentwärmespeicher 10 eines Kondensationstrockners 1 mit hoher Effizienz und konstanter Dynamik zu betreiben. Zudem können eine Speicherleistung und eine Speicherkapazität dabei getrennt voneinander dimensioniert werden.

### Bezugszeichenliste

- 1: Kondensationstrockner
- 2: Arbeitskammer
- 3: Gehäuse
- 4: Tür
- 5: Gebläse
- 6: Prozessluftkanal
- 7: Wärmequelle, Heizung
- 8: Flusensieb
- 9: Wärmetauscher
- 10: Latentwärmespeicher
- 11: Leitungssystem
- 12: Sammelbehälter
- 13: Umwälzpumpe
- 14: Temperatursensor
- 15: Wärmesenke, Luft-Luft-Wärmetauscher
- 16: Kühlluftkanal
- 17: Kühlluftgebläse

## Patentansprüche

1. Haushaltsgerät (1), insbesondere Wäschetrockner (1), umfassend eine Arbeitskammer (2) und mindestens einen Latentwärmespeicher (10), welcher je ein Speichermedium aufweist, wobei das je eine Speichermedium über je einen zugehörigen Wärmetauscher (9) thermisch mit einem durch die Arbeitskammer (2) zirkulierenden Arbeitsmedium gekoppelt ist, wobei Arbeitsmedium von der Arbeitskammer (2) zunächst zu einer Wärmesenke (15), von dort zu dem Wärmetauscher (9), von dort zu einer Wärmequelle (7) und von dort zurück in die Arbeitskammer (2) gelangt, und wobei das je eine Speichermedium gemeinsam mit je einer Trägerflüssigkeit je ein Stoffgemisch ausbildet, welches in jeweils einem geschlossenen Kreislauf über den je zugehörigen Wärmetauscher (9) zum Wärmeaustausch mit dem Arbeitsmedium führbar ist, **dadurch gekennzeichnet, dass** das je eine Stoffgemisch zwischen dem je zugehörigen Wärmetauscher (9) und mindestens einem Sammelbehälter (12) in dem jeweiligen, geschlossenen Kreislauf zirkuliert und der Sammelbehälter (12) mit dem über den je zugehörigen Wärmetauscher (9) geführten Stoffgemisch schichtweise wieder befüllbar ist.

2. Haushaltsgerät (1) nach Anspruch 1, **dadurch gekennzeichnet, dass** das je eine Stoffgemisch ausgebildet ist, indem ein mikroverkapseltes oder ein polymerisiertes PCM-Material in die je eine Trägerflüssigkeit suspendiert oder indem ein, mit Additiven versetztes PCM-Material in die je eine Trägerflüssigkeit emulgiert ist.

3. Haushaltsgerät (1) nach einem der vorigen Ansprüche, **dadurch gekennzeichnet, dass** das Stoffgemisch ein Gel ist.

4. Haushaltsgerät (1) nach einem der Ansprüche 1 bis 3, **dadurch gekennzeichnet, dass** der Sammelbehälter (12) bezüglich einer Schwerkraft ein oberes Ende und ein unteres Ende aufweist und eingerichtet ist zum Abführen des Stoffgemisches am unteren Ende und zum Zuführen des Stoffgemisches am oberen Ende.

5. Haushaltsgerät (1) nach einem der Ansprüche 1 bis 3, **dadurch gekennzeichnet, dass** der Sammelbehälter (12) eine verschiebbare Innenwand aufweist.

6. Haushaltsgerät (1) nach einem der Ansprüche 1 bis 3, **dadurch gekennzeichnet, dass** ein erster und ein zweiter Sammelbehälter (12) vorgesehen sind, wobei der erste Sammelbehälter (12) dem je zugehörigen Wärmetauscher (9) in Förderrichtung des Stoffgemischs vorgeschaltet und der zweite Sammelbehälter (12) dem je zugehörigen Wärmetauscher (9) in Förderrichtung nachgeschaltet ist, und wobei der zweite Sammelbehälter (12) in den ersten Sammelbehälter (12) entleerbar ist.

7. Haushaltsgerät (1) nach einem der vorigen Ansprüche, **dadurch gekennzeichnet, dass** der je zugehörige Wärmetauscher (9) und der mindestens eine Sammelbehälter (12) in dem jeweiligen, geschlossenen Kreislauf über je ein Leitungssystem (11) miteinander verbunden sind, in welchem eine Umwälzpumpe (13) vorgesehen ist, die das Stoffgemisch im Betrieb aus dem mindestens einen Sammelbehälter (12) ansaugt und über den je zugehörigen Wärmetauscher (9) führt, sowie in den mindestens einen Sammelbehälter (12) zurückbefördert.

8. Haushaltsgerät (1) nach einem der vorigen Ansprüche, **dadurch gekennzeichnet, dass** der je zugehörige Wärmetauscher (9) ein Plattenwärmetauscher ist, dessen Platten über hydrophobe Oberflächen verfügen.

9. Haushaltsgerät (1) nach einem der vorigen Ansprüche, **dadurch gekennzeichnet, dass** die Wärmesenke (15) ein Luft-Luft-Wärmetauscher (15) ist.

10. Haushaltsgerät (1) nach einem der vorigen Ansprüche, **dadurch gekennzeichnet, dass** die Wärmequelle (7) eine elektrische Heizung (7) ist.

11. Verfahren zum Betreiben eines Haushaltsgeräts (1), insbesondere eines Wäschetrockners (1), wobei je ein Speichermedium mindestens eines Latentwärmespeichers (10) thermisch über je einen zugehörigen Wärmetauscher (9) mit einem Arbeitsmedium des Haushaltsgeräts (1) gekoppelt wird, **dadurch gekennzeichnet, dass** das je eine Speichermedium in Wärmeaustausch mit dem Arbeitsmedium gebracht wird, indem jeweils ein durch das je eine Speichermedium und je eine Trägerflüssigkeit ausgebildetes Stoffgemisch in einem jeweils geschlossenen Kreislauf über den je zugehörigen Wärmetauscher (9) geführt wird.

12. Verfahren nach Anspruch 11, **dadurch gekennzeichnet, dass** das je eine Speichermedium des jeweiligen Stoffgemischs in Rahmen eines Wärmeeinkopplungsprozesses durch Wärme des Arbeitsmediums von einer festen Phase in eine flüssige Phase überführt wird, wobei nach einem Überführen des gesamten oder nahezu gesamten Speichermediums in die flüssige Phase in einen Wärmerückgewinnungsprozess übergegangen wird, indem ein Beheizen des Arbeitsmediums über eine Wärmequelle (7) des Haushaltsgeräts (1) unterbrochen und das Arbeitsmedium im Folgenden am je zugehörigen Wärmetauscher (9) über das je eine Speichermedium erwärmt wird, welches dabei in die feste Phase zurückkehrt, und wobei nach einem Zurückkehren des gesamten oder nahezu gesamten Speichermediums in die feste Phase wiederum in den Wärmeeinkopplungsprozess übergewechselt wird.

## Claims

1. Household appliance (1), in particular a tumble dryer (1), comprising a working chamber (2) and at least one latent heat store (10), having one storage medium in each instance, the one storage medium in each instance being thermally coupled by way of an associated heat exchanger (9) in each instance to a working medium circulating through the working chamber (2), wherein working medium passes first from the working chamber (2) to a heat sink (15), from there to the heat exchanger (9), from there to a heat source (7) and from there back into the working chamber (2) and wherein the one storage medium in each instance forms a substance mixture together with a carrier fluid in each instance, said substance mixture being able to be conducted in a closed circuit in each instance by way of the associated heat exchanger (9) in each instance for an exchange of heat with the working medium, **characterised in that** the one substance mixture in each instance circulates between the associated heat exchanger (9) in each instance and at least one reservoir (12) in the respective closed circuit and the reservoir (12) can be filled layer by layer with the substance mixture conducted by way of the associated heat exchanger (9) in each instance.

2. Household appliance (1) according to claim 1, **characterised in that** the substance mixture in each instance is formed by suspending a microencapsulated or polymerised PCM in the one carrier fluid in each instance or by emulsifying a PCM containing additives in the one carrier fluid in each instance.

3. Household appliance (1) according to one of the preceding claims, **characterised in that** the substance mixture is a gel.

4. Household appliance (1) according to one of claims 1 to 3, **characterised in that** the reservoir (12) has an upper end and a lower end in respect of gravity and is set up for the discharging of the substance mixture at the lower end and for the supplying of the substance mixture at the upper end.

5. Household appliance (1) according to one of claims 1 to 3, **characterised in that** the reservoir (12) has a movable inner wall.

6. Household appliance (1) according to one of claims 1 to 3, **characterised in that** a first and second reservoir (12) are provided, the first reservoir (12) being connected upstream of the associated heat exchanger (9) in each instance in the conveying direction of the substance mixture and the second reservoir (12) being connected downstream of the associated heat exchanger (9) in each instance in the conveying direction, it being possible for the second reservoir (12) to be emptied into the first reservoir (12).

7. Household appliance (1) according to one of the preceding claims, **characterised in that** the associated heat exchanger (9) in each instance and the at least one reservoir (12) are connected to one another by way of a line system (11) in the respective closed circuit, a circulating pump (13) being provided in said line system (11), which takes the substance mixture in from the at least one reservoir (12) during operation and conducts it by way of the associated heat exchanger (9) in each instance and also conveys it back into the at least one reservoir (12).

8. Household appliance (1) according to one of the preceding claims, **characterised in that** the associated heat exchanger (9) in each instance is a plate heat exchanger, the plates of which have hydrophobic surfaces.

9. Household appliance (1) according to one of the preceding claims, **characterised in that** the heat sink (15) is an air/air heat exchanger (15).

10. Household appliance (1) according to one of the preceding claims, **characterised in that** the heat source (7) is an electric heater (7).

11. Method for operating a household appliance (1), in particular a tumble dryer (1), wherein one storage medium of at least one latent heat store (10) in each instance is thermally coupled by way of an associated heat exchanger (9) in each instance to a working medium of the household appliance (1), **characterised in that** one storage medium in each instance is made to exchange heat with the working medium **in that** a substance mixture formed by the one storage medium in each instance and a carrier fluid in each instance is conducted in a respectively closed circuit by way of the associated heat exchanger (9).

12. Method according to claim 11, **characterised in that** the one storage medium of the respective substance mixture in each instance is changed in a heat coupling-in process by heat from the working medium from a solid phase to a liquid phase, with a transition taking place to a heat recovery process after all or almost all the storage medium has changed to the liquid phase, **in that** the heating of the working medium by way of a heat source (7) of the household appliance (1) is interrupted and the working medium is then heated at the associated heat exchanger (9) by way of the one storage medium which returns to the solid phase in the process and wherein, after all or almost all the storage medium has returned to the solid phase, there is a return to the heat coupling-in process.

## Revendications

1. Appareil ménager (1), en particulier sèche-linge (1), comprenant une chambre de travail (2) et au moins un accumulateur de chaleur latente (10), qui présente respectivement un milieu d'accumulation, dans lequel le respectivement un milieu d'accumulation est couplé thermiquement avec un milieu de travail circulant à travers la chambre de travail (2) par l'intermédiaire de respectivement un échangeur de chaleur (9) associé, dans lequel le milieu de travail passe initialement de la chambre de travail (2) à un puits de chaleur (15), puis à l'échangeur de chaleur (9), puis à une source de chaleur (7) et revient ensuite dans la chambre de travail (2), et dans lequel le respectivement un milieu d'accumulation, en commun avec respectivement un fluide porteur, constitue respectivement un mélange de substances, qui peut être guidé sur l'échangeur de chaleur (9) respectivement associé dans respectivement un circuit fermé en vue d'un échange de chaleur avec le milieu de travail, **caractérisé en ce que** le respectivement un mélange de substances circule dans le circuit fermé respectif entre l'échangeur de chaleur (9) respectivement associé et au moins un récipient de collecte (12) et le récipient de collecte (12) peut à nouveau être rempli en couches avec le mélange de substances guidé sur l'échangeur de chaleur (9) respectivement associé.

2. Appareil ménager (1) selon la revendication 1, **caractérisé en ce que** le respectivement un mélange de substances est réalisé en mettant en suspension un matériau PCM (matériau à changement de phase) micro-encapsulé ou polymérisé dans le respectivement un fluide porteur ou en émulsifiant un matériau PCM mélangé avec des additifs dans le respectivement un fluide porteur.

3. Appareil ménager (1) selon l'une quelconque des revendications précédentes, **caractérisé en ce que** le mélange de substances est un gel.

4. Appareil ménager (1) selon l'une quelconque des revendications 1 à 3, **caractérisé en ce que** le récipient de collecte (12) présente une extrémité supérieure et une extrémité inférieure par rapport à une force gravitationnelle et est agencé en vue d'une évacuation du mélange de substances au niveau de l'extrémité inférieure et en vue d'une admission du mélange de substances au niveau de l'extrémité supérieure.

5. Appareil ménager (1) selon l'une quelconque des revendications 1 à 3, **caractérisé en ce que** le récipient de collecte (12) présente une paroi intérieure déplaçable.

6. Appareil ménager (1) selon l'une quelconque des revendications 1 à 3, **caractérisé en ce qu'**un premier et un deuxième récipients de collecte (12) sont prévus, dans lequel le premier récipient de collecte (12) est placé en amont de l'échangeur de chaleur (9) respectivement associé dans une direction d'alimentation du mélange de substances et le deuxième récipient de collecte (12) est placé en aval de l'échangeur de chaleur (9) respectivement associé dans une direction d'alimentation, et dans lequel le deuxième récipient de collecte (12) peut être vidé dans le premier récipient de collecte (12).

7. Appareil ménager (1) selon l'une quelconque des revendications précédentes, **caractérisé en ce que** l'échangeur de chaleur (9) respectivement associé, et le au moins un récipient de collecte (12) sont reliés l'un à l'autre dans le circuit fermé respectif par l'intermédiaire de respectivement un système formant conduite (11), dans lequel est prévue une pompe de circulation (13) qui aspire le mélange de substances en cours de fonctionnement à partir du au moins un récipient de collecte (12), le guide sur l'échangeur de chaleur (9) respectivement associé, et le réachemine également dans le au moins un récipient de collecte (12).

8. Appareil ménager (1) selon l'une quelconque des revendications précédentes, **caractérisé en ce que** l'échangeur de chaleur (9) respectivement associé est un échangeur de chaleur à plaques, dont les plaques disposent de surfaces hydrophobes.

9. Appareil ménager (1) selon l'une quelconque des revendications précédentes, **caractérisé en ce que** le puits de chaleur (15) est un échangeur de chaleur air-air (15).

10. Appareil ménager (1) selon l'une quelconque des revendications précédentes, **caractérisé en ce que** la source de chaleur (7) est un chauffage électrique (7).

11. Procédé de fonctionnement d'un l'appareil ménager (1), en particulier un sèche-linge (1), dans lequel respectivement un milieu d'accumulation d'au moins un accumulateur de chaleur latente (10) est couplé thermiquement avec un milieu de travail de l'appareil ménager (1) par l'intermédiaire de respectivement un échangeur de chaleur (9) associé, **caractérisé en ce que** le respectivement un milieu d'accumulation est amené à échanger de la chaleur avec le milieu de travail, en guidant respectivement un mélange de substances constitué du respectivement un milieu d'accumulation et de respectivement un fluide porteur, sur l'échangeur de chaleur (9) respectivement associé dans un circuit respectivement fermé.

12. Procédé selon la revendication 11, **caractérisé en ce que** le respectivement un milieu d'accumulation du mélange de substances respectif est converti d'une phase solide en une phase liquide grâce à de la chaleur du milieu de travail dans le cadre d'un procédé de couplage de chaleur, dans lequel, on passe à un procédé de récupération de chaleur après une conversion de la totalité ou de la presque totalité du milieu d'accumulation en phase liquide, en interrompant un chauffage du milieu de travail par l'intermédiaire d'une source de chaleur (7) de l'appareil ménager (1) et en réchauffant ensuite le milieu de travail au niveau de l'échangeur de chaleur (9) respectivement associé par l'intermédiaire du respectivement un milieu d'accumulation, qui retourne alors dans la phase solide, et dans lequel, on procède à nouveau à un changement dans le procédé de couplage de chaleur après un retour de la totalité ou de la presque totalité du milieu d'accumulation dans la phase solide.
